# EUROPEAN PATENT APPLICATION

(11) **EP 2 194 471 A1**
(43) Date of publication of application: **09.06.2010**
(21) Application number: 09176280.7
(22) Date of filing: 18.11.2009
(51) Int. Cl.: G06F 17/30

(54) **Dynamic prefetching method and system for metadata**

(30) Priority: 05.12.2008 TR 200809433
(71) Applicant: Vestel Elektronik Sanayi ve Ticaret A.S., 45030 Manisa (TR)
(72) Inventor: Çetin, Görkem, Istanbul (TR); Gümüs, Uygar, Üsküdar/Istanbul (TR); Küpüsoglu, Oguz, Çekmeköy/Istanbul 34782 (TR)
(74) Representative: Cayli, Hülya

(57) **Abstract**

The present invention relates generally to interactive communication systems and, more particularly, to a method and system for reducing latencies of retrieving metadata by a user application. The method comprises providing a browsing interface for the user to browse through; and prefetching metadata likely to be soon accessed in advance of an actual user request for access to said metadata; wherein said prefetching of said metadata is performed dynamically based on prediction of at least one next available user action with respect to a current view of said browsing interface being directed towards fetching said metadata. The present invention aids a seamless browsing experience as the metadata is immediately available, being already prefetched, to the user upon his actual request.

## Description

### Technical Field

The present invention relates generally to interactive communication systems and, more particularly, to a method and system for reducing latencies of retrieving metadata by a user application. The invention is applicable for example for IPTV (internet protocol television) devices, STB (set-top-box) devices or mobile devices.

### Prior Art

In interactively communicating devices such as IPTV, STB or mobile devices (consumer devices), which provide a connection to internet or another network facility via high speed transmission media, optimal user experience can be influenced by a number of factors, as is well known in the art, including the speed of the communicating device or the bandwidth of the network connecting the device with the server and application portal. Users usually suffer from latencies observable due to high amount of time when downloading digital media to the device or slowness of return paths.

Current technologies and solutions generally focus on leveraging flow of media data, particularly for the purpose of eliminating delays in delivery of requested digital media for either real-time playing or playback after download.

PCT Patent Application Publication No. WO 2008/033598 A1 discloses a method and an apparatus for selecting and pushing customized electronic media content to a user device. According to the invention of the PCT publication, the method selects electronic media content based on user characteristic data associated with a user, determines the storage capability of a user device associated with the user, and pushes at least a first portion of the selected content to the user device before the user actually demands this piece of content. The invention, hence, increases user experience providing the user with the content immediately after it is actually requested.

On the other hand, in the case of rapid browsing activity of the user for digital media, the user application accomplishes continuous downloading of metadata which describes the content of corresponding digital media and provides the user with preliminary information relevant to the video, audio or image data concerned. Such continuous access to metadata may, in some cases, bring up congestion problems in the network. In particular, if the network connection is of low speed, subsequent requests of the user will be dealt with relatively slowly, detracting from the user experience. This is obviously an undesired situation which should be overcome. However, in order to eliminate such delays on the network, the user most probably may not be capable of increasing the bandwidth of his house, which limits the speed of download.

There is a need to prevent the user from experiencing long latencies when accessing metadata. This problem has also been addressed in the US Patent Application Publication No. US 2008/0177754 A1. Referred US publication describes a method for reducing network latencies observable by a user application that accesses metadata. Such method employs prefetching the metadata of the directories that are close in a filesystem hierarchy to the directories that are actually accessed. Although the proposed solution disclosed in the US publication helps hiding latencies from user applications that access metadata, it is not specifically user-oriented e.g. it does not take into account likely user actions, therefore lacks to provide a dynamic prefetching. The subject matter of the US publication furthermore requires an initial actual access to a specific metadata in order to perform prefetching metadata in the vicinity of said actual access which detracts from the self-dependency of the solution.

### Object of the Invention

The object of the present invention is to provide a method and system for reducing latencies in access to metadata which allow benefiting from dynamic prefetching of metadata which does not require an initial actual access to a specific metadata and takes into account likely user actions.

### Brief Description of the Drawings

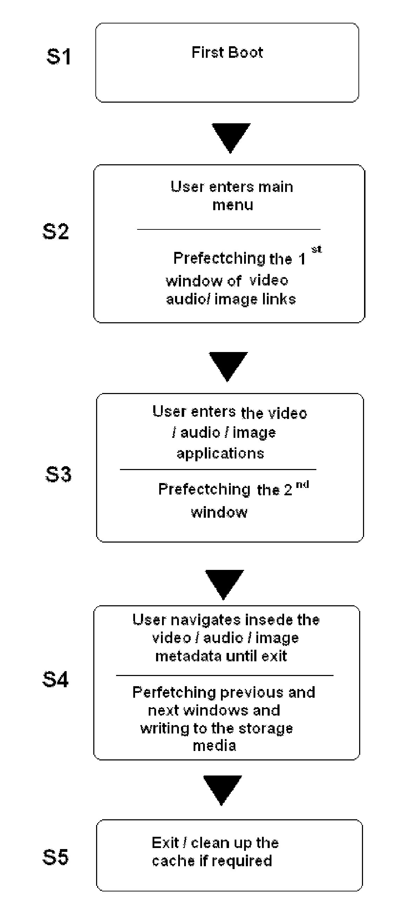

- Fig. 1: is a flow diagram of the system for illustrating basic mechanism in accordance with a preferred embodiment of the invention.

### Detailed Description of the Invention

In consumer devices such as IPTV, STB or mobile devices, the user is commonly provided with a browsing interface for him to browse through for digital media content which he wishes to either real-time play or playback after download over an interactive communication system. Such an interactive communication system is possibly a client-server or P2P communication system coupled to internet or another network facility.

Such consumer devices are mostly preconfigured with many applications, to be utilized with input means such as a remote controller (RC), a key pad or a touch screen. These input means facilitate navigation through the browsing interface on a display of the consumer device. The user provides inputs via the input means to instruct the actions he wished. As these devices are directly connected to internet or to another network facility, input commands may be in the form of "download the 3^{rd} photo", "download the next video" or "play the current video" and so on. While retrieving media (e.g. photo and video), a suitable listing mechanism is utilized for the purpose of displaying a maximum number of metadata for the convenience of the user e.g. for his review and choosing. The user can then select the media he wished from the list and can either real-time play or playback after download the corresponding media content.

According to the present invention, there is provided a method and system for immediately making available to a user, in response to his request, a ready-to-consume metadata descriptive of the corresponding digital media in the course of his browsing for digital media, enabling reduced latencies in access to metadata by the relevant user application over an interactive communication system.

It should be noted that the core aspect of the invention lies in prefetching metadata dynamically upon prediction of at least one next available user action with respect to a current view of the browsing interface being directed towards fetching said metadata.

The proposed solution basically predicts at least one next user action among a number of possible actions which the user can select to perform depending on his preference with respect to a current view of the browsing interface, and pre-downloads such predicted metadata. This enables the user to switch, in a swift manner, to a subsequent view of the browsing interface, e.g. a list comprising the prefetched metadata, since the metadata has already been prefetched prior to the actual request from the user and is thus immediately available upon request. The invention serves substantially eliminating latencies in access to metadata stemming from delays on the network, and moreover probably on the operating system or due to overheads regarding the data storage.

In accordance with a preferred embodiment of the invention, said prediction comprises evaluating a plurality of next available user actions for the user to select among with respect to a current view of the browsing interface.

Further embodiments and improvements of the invention are described in the dependent claims. Hereinafter, the invention will be described with reference to its preferred embodiments and with reference to its attached drawing Fig. 1. However, it is noted that the invention can comprise other embodiments resulting from the combination of features described and shown separately in the specification, the claims and the drawings. Moreover, although the invention is described below with reference to its preferred embodiments, in the context of an IPTV device, it should be noted that the invention is not restricted to the application to an IPTV device. The invention may as well be employed in connection with any interactively communicating device which has the capability of access to metadata via a browsing interface.

Fig. 1 shows a preferred embodiment in accordance with the principle of the invention in the context of an IPTV device for solving the above stated technical problem.

In the first step S1, as the user powers on his IPTV device, the system initially boots. Each and every module which enables the system to work is loaded, such as the ones providing the necessary arrangements for access to internet and the ones displaying browsing interface of the device which allows the user to navigate through e.g. graphical screen.

In the following step S2, the user enters into the main menu. Potentially downloadable metadata is predicted based on the available likely actions of the user, and is prefetched in accordance with the principle of the invention. Said prefetched metadata, preferably, comprises a plurality of metadata. Each metadata, preferably, involves a relevant link which takes the user to the database storing the corresponding digital media. Metadata is, preferably, embodied in a first window of video / audio / image (VAI) links to the digital media content to be consumed by the user, and which are prefetched from a server device.

In the third step S3, the user enters into the main application such as a video or audio application. Based on the prediction regarding at least one next available user action to be directed towards fetching particular metadata, the second window e.g. the next selection menu, comprising the relevant metadata in the form of next VAI links is automatically preloaded in accordance with the principle of the invention.

As further step S4, the user may continue navigating through the browsing interface e.g. the windows, making selections for his actions via his remote control. During such rapid browsing activity of the user, previous N and next N windows with respect to a current window, are continuously and dynamically prefetched, and stored. N corresponds to the number of windows to be prefetched preceding and following a current window, and it may depend on network speed, storage capacity or CPU power of the device.

Finally in the last step S5, when the user exits the application, the memory e.g. cache, used for storing the prefetched metadata may be cleaned up if required.

According to a preferred embodiment of the invention, said prefetching involves reading data into a memory, with or without a network speed regulation mechanism which is used to control the flow of incoming metadata to the consumer device.

Said prefetching is, preferably, performed within idle periods in which the user is either interacting with the browsing interface or is busy with viewing any digital media content. A proposed solution will prefetch metadata within said idle periods when network connection (e.g. performance) is considerably enough.

It should be appreciated that the skilled person can devise other embodiments of the invention on the basis of the present description, the drawings and the claims. However, all such embodiments and variations of the invention are covered within the scope of the attached claims.

## Claims

1. A method for reducing latencies in access to metadata by a user application over an interactive communication system, said metadata being descriptive of the content of corresponding digital media, the method comprising;
- providing a browsing interface for the user to browse through; and
- prefetching metadata likely to be soon accessed in advance of an actual user request for access to said metadata; wherein said prefetching of said metadata is performed dynamically based on prediction of at least one next available user action with respect to a current view of said browsing interface being directed towards fetching said metadata.

2. Method according to Claim 1, wherein said prediction comprises evaluating a plurality of said next available user actions for the user to select among with respect to said current view of said browsing interface.

3. Method according to Claim 1, wherein said metadata likely to be soon accessed comprises a plurality of metadata.

4. Method according to Claim 3, wherein each metadata involves a relevant link to the database storing corresponding digital media.

5. Method according to Claims 1 to 4, wherein in response to an actual user request for access to said plurality of metadata, said plurality of metadata previously prefetched is displayed on a subsequent view of said browsing interface in a listing form constituting a selection menu for the user.

6. Method according to Claim 5, wherein a plurality of further metadata likely to be displayed in a plurality of subsequent views of said browsing interface is prefetched.

7. Method according to Claim 1, wherein said user application is hosted by an IPTV device, a set-top-box device or a mobile device.

8. Method according to Claim 1, wherein said prefetching involves reading data into a memory.

9. Method according to Claim 1, wherein said interactive communication system is a client-server or P2P communication system coupled to internet or another network facility.

10. Method according to Claims 6 to 9, wherein said plurality of further metadata to be prefetched is determined in accordance with network speed, storage capacity of said memory and CPU power of said hosting device for said user application.

11. Method according to Claim 1, wherein said prefetching is performed within idle periods, said idle periods including time periods in which the user interacts with said browsing interface or is busy with viewing said digital media content.

12. Method according to Claim 11, wherein said prefetching is performed within said idle periods when network connection is considerably enough.

13. Method according to Claim 1, wherein said next user action is instructed by either pushing corresponding remote control button of a remote control device or corresponding key on a key pad which has been previously designated to perform said next user action, or by making use of a touch screen.

14. Method according to Claim 1, wherein said digital media includes video, audio or image media content.

15. Method according to Claim 1, wherein said prefetching is performed with or without a network speed regulation mechanism.

16. Method according to Claim 1, wherein said prefetching is continuously performed during rapid browsing activity of the user.

17. A system for reducing latencies in access to metadata by a user application over an interactive communication system, said metadata being descriptive of the content of corresponding digital media, the system comprising;
- browsing interface means for the user to browse through; and
- prefetching means for prefetching metadata likely to be soon accessed in advance of an actual user request for access to said metadata; wherein said prefetching of said metadata is performed dynamically based on prediction of at least one next available user action with respect to a current view of said browsing interface being directed towards fetching said metadata.
